# EUROPEAN PATENT SPECIFICATION

(11) **EP 2 460 689 B1**
(45) Date of publication and mention of the grant of the patent: **21.08.2013**
(21) Application number: 10425374.5
(22) Date of filing: 06.12.2010
(51) Int. Cl.: B60R 7/04, B60R 7/08, B60N 3/10

(54) **Vehicle holder, in particular for holding bottles, cans, ashtray, coin tray, and the like**
Fahrzeughalterung, insbesondere zum Halten von Flaschen, Dosen, Aschenbecher, Münzfach und dergleichen
Support de véhicule, en particulier pour contenir des bouteilles, des cannettes, un cendrier, un range-pièces et similaire

(43) Date of publication of application: 06.06.2012
(73) Proprietor: Iveco S.p.A., 10156 Torino (IT)
(72) Inventor: Armigliato, Marco, 10153 Torino (IT); Bruno, Giuseppe, 10129 Torino (IT)
(74) Representative: Borsano, Corrado

(56) References cited:
- WO-A2-2009/046393
- US-A- 3 036 717
- US-A1- 2002 162 194
- US-A1- 2009 108 149
- US-A1- 2010 051 664
- US-B1- 7 607 627

## Description

### Field of the invention

This invention relates to a vehicle holder for holding bottles.

### Description of the prior art

Making functional compartments in the dashboard or anyway in the vehicle furnishing involves reducing the available space. Providing a tray, for example a pull-out tray, involves reducing the space available for compartments or for boxes to put away objects and personal belongings of the passengers and of the driver

Thus, organizing a correct distribution of glove compartments and further holders such as can holders, bottle holders, ashtrays, coin trays, etc., is difficult.

On the other hand, even in the case of an accurate and complex arrangement of the internal space of the vehicle, a user may always have specific needs that are not satisfied by such arrangement of the space and of the holders. US2009/108149 shows a vehicle holder, whose features are in the preamble of claim 1.

### Summary of the invention

The aim of the present invention is to provide a vehicle holder for holding bottles, suitable to solve the aforementioned problem of organizing the internal space and the holders of a vehicle.

The object of the present invention is a vehicle holder for holding bottles, according to claim 1.

A further object of the present invention is a vehicle, comprising a support element of a vehicle holder, according to claim 4.

Thus a further object of the present invention is the usage of a vehicle device for holding bottles as described in the respective claims.

The claims describe preferred embodiments of the invention, and are an integral part of the present description.

### Brief description of the Figures

Further characteristics and advantages of the invention will be more apparent in light of a detailed description of preferred, but non-exclusive, embodiments of a vehicle holder for holding bottles, shown with the help of the drawings that are attached hereto, which are merely illustrative and not limitative, in which:

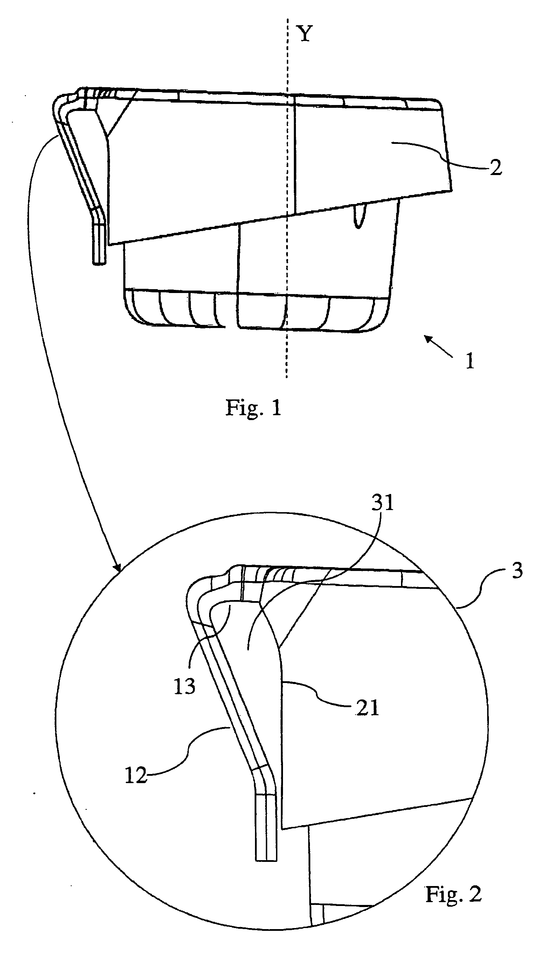

Fig. 1 shows a lateral view of a holder according to the present invention,
Fig. 2 shows a detail of the view of figure 1,

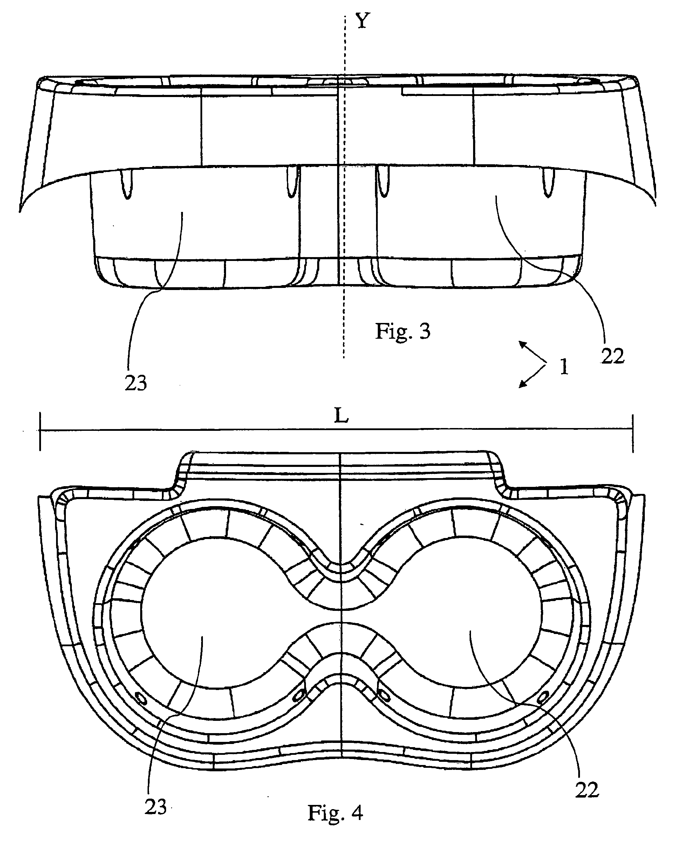

Fig. 3 shows a front view of the holder of figure 1,
Fig. 4 shows a top view of the holder of figure 1,
Fig. 5 shows an application of the invention in a vehicle's part.

In the figures the same reference numbers and letters identify the same elements or components.

### Detailed description of a preferred embodiment of the invention

The holder 1 according to the present invention, and with particular reference to the figures, comprises a body of the holder 2 having a clip 3 for its hanging, connected to a side of the body of the holder 2, preferably turned downwards, with reference to the vertical direction Y. The holder 1, may advantageously be hung to any border of vertical walls existing in a vehicle, having at least a freely accessible portion, where the clip 3 may be inserted.

The body of the holder 2 develops as a shelf, being perpendicular with respect to the insertion direction Y of the clip 3.

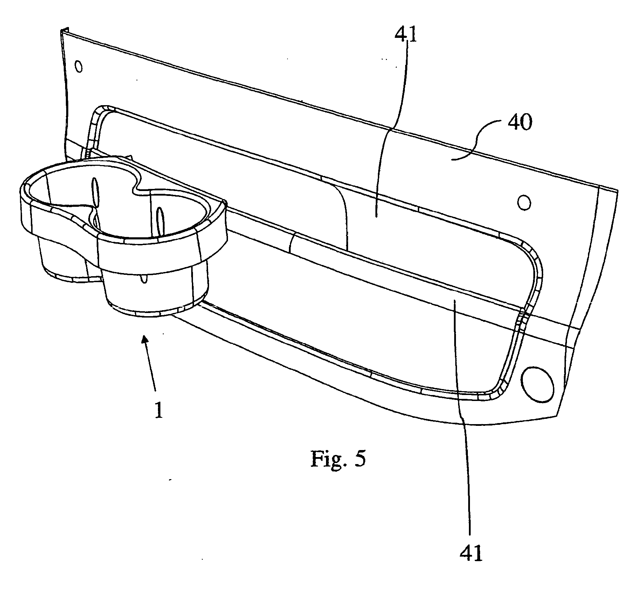

Figure 5 shows an interior panel 40 of a vehicle's door, to which the holder 1 is hooked. Advantageously, almost all the vehicles have doors with pockets or compartments integrated in their interior panels 40 or in the rear part of the seat back. Pockets or compartments 41 have at least a vertical or slightly inclined surface, having an accessible upper border. For example some vehicle have a grab handle which runs along the dashboard in horizontal direction in correspondence of the passenger seat.

Such handle may be a valid holding element for the present holder.

In order to facilitate the connection of the holder, appropriate support elements may be provided, such as sticks 41 or tongues, defining an upward protrusion for the connection of the clip 3.

Thus, by providing a plurality of support element integrated with or superimposed to the interior panels of a vehicle, and by providing a plurality of different holders having the same clip 3, it is possible for the driver and/or the passengers of the vehicle, to customize the vehicle in terms of type of holders and of position of the holder itself.

For example, in the alternative embodiment shown in the figures, the holder 1 comprises two cup holders 22 and 23 for cans or bottles.

Preferably, the holder 1 comprises two cup holders 22 and 23 whose cavities are communicating, defining a roof prism with a 8-shaped base.

Thus, on the one hand the holder 1 is suitable for any vehicle having at least some pockets or compartments, such as the ones in the vehicle doors or in the rear part of the seat back; on the other hand, the vehicle's dashboard may be equipped with appropriate sticks 41 or handles, or upward protruding surfaces, in order to hook at least a holder 1. Some drivers hang the drinks outside the vehicle in order to cool them, for example by means of plastic bags.

The present invention also solves the problem of hanging cans and bottles outside the vehicle, since the described holder may also be connected to a window, so that the body of the holder 2 projects outwards.

Moreover, by rolling up the window the holder blocked, and it is impossible to get it unhooked from the window.

The body of the holder 2 comprises a surface 21, at least partially flat and at least partially parallel to the vertical direction Y, on which a tongue 12 is folded, preferably with an elastic preload.

Thus the clip 3 is defined:
- by the tongue 12 one end of which is integral with the body of the holder 2 and
- by the surface 21 of the body of the holder itself, against which the other end of the tongue presses.

In particular, in the connecting part between the tongue 12 and the body of the holder 2, a support surface 13 is preferably present, which is perpendicular with respect to the vertical direction Y.

Realizing the body of the holder 2 integral with the clip 3, made of plastic or of metal, allows the use of one single material that is more easily disposed of. According to another alternative embodiment that is not shown in the pictures, the clip is formed by a pair of tongs hinged to the body of the holder, so that the contact surface of the opposite parts of the tongs is adjustable. Thus the holder may be easily connected also to panel edges and to surfaces that are not perfectly vertical.

Preferably the clip 3, defined by the surface 21 and its corresponding tongue 12, extends along a relevant portion, namely ¾, of the width L of the holder 1, so that it ensures that the device is firmly fixed, above all when the latter includes several compartments for cans and heavy objects, avoiding the unhooking of the holder from the support element when it is loaded in an unbalanced way.

Preferred support elements in a vehicle are handles, holders with substantially vertical walls, horizontal sticks fixed in order to have a vertical development surface, tongues projecting upwards in any position inside the vehicle or a window.

Preferably, the section of the development direction of the support element, handle, stick, etc. is similar and compatible with the space 31 comprised within and defined by the tongue 12 and the surface 21, which in the showed example is substantially triangular.

The elements and the characteristics described in the different preferred embodiments may be combined without departing from the scope of the present invention.

## Claims

1. Vehicle holder for holding two bottles comprising a body of the holder (2) having
- two bottle holder compartments (22, 23),
- a shelf developed by the body at an upper portion of said two cup holder compartments (22, 23), the shelf being perpendicular with respect to a vertical direction (y),
- a peripheral frame surrounding the body, integral with the shelf and with sides at least partially parallel to the vertical direction (y)
**characterized by** a hanging clip (3) connected to a central portion of one of said sides of the body of the holder (2) and wherein said clip (3) is formed by a tongue (12) integral with the body of the holder (2) from one side and by a surface (21) of said frame of the body itself, against which the tongue (12) presses, the tongue (12) and the surface (21) are being positioned in order to identify a downward direction of insertion of the clip (3), when the holder is in an utilization position.

2. Holder according to claim 1, wherein the clip (3) extends for at least ¾ of a width (L) of the body of the holder (2).

3. Holder according to any of the previous claims, wherein the bottles holder compartments are defined by communicating roof prism-shaped cavities, with a 8-shaped base.

4. Vehicle comprising at least one of the following support elements:
- a horizontal stick (41),
- a tongue projecting upwards
- a handle
- a vertical wall
connected to the vehicle's dashboard or to a covering panel (40) of the vehicle's cabin, supporting a holder (1) according to any of claims 1 to 3.

5. Vehicle according to claim 4, wherein said clip defines a space comprised within the clip, and wherein said support element has a development direction with a section compatible with said space.

6. Usage of a holder according to any claim from 1 to 3 in a vehicle.

## Patentansprüche

1. Fahrzeughalter zum Halten zweier Flaschen, wobei der Fahrzeughalter einen Körper des Halters (2) umfasst, der Folgendes aufweist:
- zwei Flaschenhalterabteile (22, 23),
- eine durch den Körper in einem oberen Abschnitt der genannten zwei Becherhalterabteile (22, 23) entwickelte Ablage, wobei dieAblage in Bezug auf eine vertikale Richtung (Y) senkrecht ist,
- einen den Körper umgebenden Umfangsrahmen, der einteilig mit derAblage und mit den Seiten wenigstens teilweise parallel zu der vertikalen Richtung (Y) ist, **gekennzeichnet durch** eine Hängeklemme (3), die mit einem zentralen Abschnitt einer der genannten Seiten des Körpers des Halters (2) verbunden ist, und wobei diegenannte Klemme (3) **durch** eine Zunge (12), die von einer Seite einteilig mit dem Körper des Halters (2) ist, und **durch** eine Oberfläche (21) desgenannten Rahmens des Körpers selbst, gegen die die Zunge (12) drückt, gebildet ist, wobei die Zunge (12) und die Oberfläche (21) in der Weise positioniert sind, dass sie eine Einführungsrichtung der Klemme (3) nach unten identifizieren, wenn der Halter in einer Nutzungsstellung ist.

2. Halter gemäß Anspruch 1, wobei die Klemme (3) über wenigstens 3/4 einer Breite (L) des Körpers des Halters (2) verläuft.

3. Halter gemäß einem der vorhergehenden Ansprüche, wobei die Flaschenhalterabteile durch Verbinden dachprismaförmiger Hohlräume mit einer8-förmigen Basis definiert sind.

4. Fahrzeug, das wenigstens eines der folgenden Stützelemente umfasst:
- einen horizontalen Stab (41),
- eine Zunge, die nach oben vorsteht,
- einen Griff,
- eine vertikale Wand,
das mit dem Armaturenbrett des Fahrzeugs oder mit einer Abdeckplatte (40) des Fahrzeuginnenraums verbunden ist, das einen Halter (1) gemäß einem der Ansprüche 1 bis 3 stützt.

5. Fahrzeuggemäß Anspruch 4, wobei diegenannte Klemme einen innerhalb der Klemme enthaltenen Raum definiert und wobei dasgenannte Stützelement eine Entwicklungsrichtung mit einem mit demgenannten Raum kompatiblen Schnitt aufweist.

6. Nutzung eines Halters gemäß einem der Ansprüche 1 bis 3 in einem Fahrzeug.

## Revendications

1. Support de véhicule pour retenir deux bouteilles comprenant un corps du support (2) ayant
- deux compartiments de support de bouteille (22, 23),
- une étagère développée par le corps à une portion supérieure desdits deux compartiments de support de bouteille (22, 23), l'étagère étant perpendiculaire relativement à une direction verticale (y),
- un châssis périphérique entourant le corps, intégral avec l'étagère et avec des côtés au moins partiellement parallèles à la direction verticale (y),
**caractérisé par** une pince de suspension (3) connectée à une portion centrale d'un desdits côtés du corps du support (2), et où ladite pince (3) est formée par une languette (12) intégrale avec le corps du support (2) depuis un côté et par une surface (21) dudit châssis du corps lui-même, contre laquelle la languette (12) exerce une pression, la languette (12) et la surface (21) étant positionnées pour identifier une direction d'insertion vers le bas de la pince (3) lorsque le support se trouve en position d'utilisation.

2. Support selon la revendication 1, où la pince (3) s'étend sur au moins ¾ d'une largeur (L) du corps du support (2).

3. Support selon l'une quelconque des revendications précédentes, dans lequel les compartiments de support de bouteilles sont définis par des cavités en forme de prisme, à toits communicants, avec une base en forme de 8.

4. Véhicule, comprenant au moins un des éléments de support suivantes :
- une tige horizontale (41),
- une languette faisant saillie vers le haut
- une poignée
- une paroi verticale
connectée au tableau de bord du véhicule ou à un panneau de recouvrement (40) de la cabine du véhicule, supportant un support (1) selon l'une quelconque des revendications 1 à 3.

5. Véhicule selon la revendication 4, où ladite pince définit un espace compris dans la pince, et où ledit élément de support a une direction de développement avec une section compatible avec ledit espace.

6. Usage d'un support selon l'une quelconque des revendications 1 à 3 dans un véhicule.
